**Europäisches Patentamt**

**European Patent Office**

**Office européen des brevets**

(19)

(11) Numéro de publication : **0 195 706**
**B1**

(12) FASCICULE DE BREVET EUROPÉEN

(45) Date de publication du fascicule du brevet :
**19.10.88**

(21) Numéro de dépôt : **86400444.5**

(22) Date de dépôt : **04.03.86**

(51) Int. Cl.⁴ : **F 16 D 23/06, F 16 D 21/04**

(54) Manchon de crabotage en métal fritté pour boite de vitesses automobiles.

(30) Priorité : **15.03.85 FR 8503869**

(43) Date de publication de la demande :
**24.09.86 Bulletin 86/39**

(45) Mention de la délivrance du brevet :
**19.10.88 Bulletin 88/42**

(84) Etats contractants désignés :
**DE GB IT**

(56) Documents cités :
**EP-A- 0 005 645**
**DE-A- 1 952 597**
**DE-A- 2 411 516**
**DE-B- 2 659 448**
**FR-A- 1 036 472**
**NL-C- 100 967**
**US-A- 1 730 362**
**US-A- 3 249 188**

(73) Titulaire : **AUTOMOBILES PEUGEOT, Société dite:**
**75, Avenue de la Grande-Armée**
**F-75761 Paris Cedex 16 (FR)**

**AUTOMOBILES CITROEN**
**62 Boulevard Victor-Hugo**
**F-92200 Neuilly-sur-Seine (FR)**

(72) Inventeur : **Bouveret, Jean-Michel**
**7 avenue de Plaisance**
**F-94100 Saint-Maur (FR)**
Inventeur : **Landry, Thierry**
**13 Square G. Apollinaire**
**F-95240 Cormeilles-en-Parisis (FR)**

(74) Mandataire : **Moncheny, Michel et al**
**c/o Cabinet Lavoix 2 Place d'Estienne d'Orves**
**F-75441 Paris Cedex 09 (FR)**

Jouve, 18, rue St-Denis, 75001 Paris, France

## Description

L'invention est relative à un manchon de crabotage utilisé dans certaines boîtes de vitesses de véhicules automobiles et comportant des cannelures intérieures qui coulissent sur un moyeu cannelé solidaire d'un arbre et qui sont propres à s'accoupler alternativement avec deux dentures de crabotage respectivement solidaires de deux pignons tournant fous sur l'arbre de part et d'autre du manchon.

Ces cannelures, parallèles à l'arbre, comportent de préférence, près de chacune de leurs deux extrémités, une proéminence latérale destinée à coopérer avec une portion inclinée en « contredépouille » de la dent de crabotage correspondante afin d'empêcher que le manchon ne se dégage intempestivement de la denture crabotée. Cet aménagement, appelé « anti-lâcher », est tel qu'un couple transmis du manchon au pignon ainsi accouplé, ou inversement du pignon au manchon, se traduit par une force d'appui entre chaque cannelure et la dent de crabotage associée au droit desdites proéminence et portion inclinée, force perpendiculaire à cette portion donc tendant à déplacer axialement le manchon dans le sens de son engagement dans la denture crabotée.

Cette disposition présente l'inconvénient d'être relativement délicate et coûteuse à réaliser du fait des proéminences habituellement formées sur les deux flancs de chacune des cannelures du manchon. On sait qu'il est avantageux de réaliser des dentures ou des cannelures par frittage d'un métal, procédé qui permet de conformer les pièces avec quelques reliefs sans impliquer d'usinage. Du DE-B-26 59 448 il est connu de fabriquer un manchon de crabotage en métal fritté. Mais dans le cas de cannelures devant s'accoupler alternativement par leurs deux extrémités avec deux dentures de crabotage situées de part et d'autre du manchon, lesdites proéminences doivent être formées aux deux extrémités des cannelures, et le procédé de frittage n'est alors pas recommandable à cause de l'impossibilité de démouler le noyau de fabrication correspondant sans le détruire.

L'invention a pour but de réaliser en métal fritté un manchon de crabotage avec un noyau séparable comportant des cannelures intérieures munies à leurs deux extrémités de proéminences de dispositifs « anti-lâcher ».

Conformément à l'invention, chaque paire ou la plupart des paires de cannelures consécutives du manchon comporte, respectivement sur les deux flancs se faisant face, alternativement deux surépaisseurs centrales propres à enserrer de façon coulissante l'une des cannelures du moyeu, ou deux proéminences extrêmes en vis-à-vis pour un dispositif anti-lâcher correspondant à l'une des deux dentures.

Suivant d'autres particularités de l'invention :

— chaque cannelure du manchon comporte sur l'un de ses flancs et à l'une de ses extrémités une proéminence pour un dispositif anti-lâcher, et sur son autre flanc alternativement une proéminence à son autre extrémité ou une susdite surépaisseur centrale ;

— le manchon comportant dans sa partie intérieure cannelée plusieurs rainures parallèles aux cannelures et contenant chacune une barrette coulissante d'un synchroniseur, chaque rainure comporte dans son fond un relief central à bords inclinés, coopérant avec une face de profil complémentaire de la barrette correspondante.

Ces caractéristiques de l'invention permettent de réaliser le manchon par frittage au moyen d'un noyau en deux parties respectivement démoulables axialement de part et d'autre du manchon.

Un exemple non limitatif de réalisation d'un manchon selon l'invention est décrit ci-après, associé à un synchroniseur, en référence aux dessins annexés parmi lesquels :

— la figure 1 est une vue en coupe axiale d'un dispositif de crabotage pourvu d'un manchon selon l'invention ;

— la figure 2 est une vue développée au droit d'une coupe suivant II-II de la figure 1 ;

— et la figure 3 est une vue en coupe axiale suivant la ligne III-III de la figure 2.

On voit sur les figures, sur un arbre 1 d'une boîte de vitesses d'un véhicule automobile, deux pignons 2, 3 tournant librement sur des coussinets 4, 5 de part et d'autre d'un moyeu 6 ancré sur l'arbre 1 au moyen de dentelures et cannelé à sa périphérie 7.

Cette périphérie 7 coopère avec des cannelures intérieures (8a, 8b, 8c) d'un manchon 9 susceptible de coulisser axialement d'une position médiane 9a à l'une ou l'autre de deux positions extrêmes 9b, 9c où lesdites cannelures (8a, 8b, 8c) sont accouplées par l'une de leurs extrémités avec des dentures de crabotage 10 ou 11 respectivement solidaires du pignon 2 et du pignon 3, ceux-ci étant arrêtés axialement sur l'arbre 1 de façon classique non représentée.

Pour faciliter le crabotage des cannelures (8a-8c) du manchon 9 avec les dentures 10, 11, les extrémités de chaque cannelure sont biseautées, ainsi que les entrées de dents des dentures, et pour éviter qu'après crabotage le manchon 9 ne se désaccouple intempestivement de la denture, chaque flanc des dents comporte une portion inclinée 12a, 12b en contredépouille faisant suite à l'entrée biseautée et destinée à coopérer avec une proéminence extrême 13a, 13b d'un flanc de cannelure du manchon 9. Cette combinaison d'une portion inclinée 12a, 12b et d'une proéminence 13a, 13b constitue un dispositif connu dit anti-lâcher.

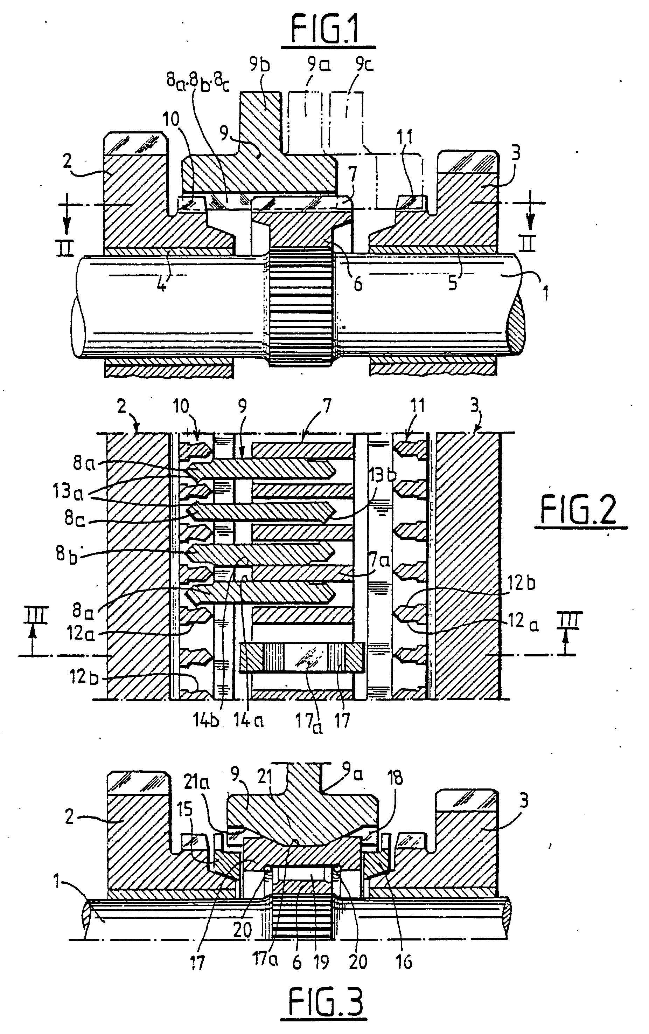

Comme on le voit à la figure 2, les proéminences 13a, 13b sont prévues par paires, en vis-à-vis sur des flancs se faisant face de cannelures consécutives 8a, 8c ou 8c, 8b, alternativement à l'une ou l'autre des extrémités de celles-ci. Cette alternance permet de réaliser le manchon 9 par frittage avec un noyau en deux paires se joignant au droit des proéminences 13a, 13b et démoulables axialement de part et d'autre du manchon 9.

Par ailleurs, pour que les cannelures 8a, 8b, 8c du manchon 9 puissent se déplacer entre celles du moyeu 6 malgré les proéminences 13a, 13b, leur épaisseur est notablement inférieure à la distance séparant deux cannelures du moyeu 6. Le guidage du manchon 9 sur le moyeu 6 est alors assuré grâce à des surépaisseurs centrales 14a, 14b formées sur des flancs se faisant face de plusieurs paires de cannelures consécutives 8a, 8b du manchon 9, ces surépaisseurs enserrant de façon coulissante l'une des cannelures 7a du moyeu. Les surépaisseurs 14a, 14b sont prévues sur des flancs ne comportant pas de proéminence 13a, 13b, ce qui permet la réalisation précitée par frittage.

Pour assurer une répartition convenable des efforts transmis du manchon 9 au moyeu 6 et à l'un des pignons 2, 3, ou inversement, les cannelures consécutives 8a, 8b, 8c du manchon 9 ont leurs flancs se faisant face successivement munis de surépaisseurs centrales 14a, 14b, de proéminences 13b en vis-à-vis à une extrémité, et de proéminence 13a en vis-à-vis à l'autre extrémité. Ainsi, chaque cannelure 8a, 8b, 8c comporte sur l'un de ses flancs et à l'une de ses extrémités une proéminence 13a pour un dispositif anti-lâcher relatif à l'une des dentures 10, 11 et sur son autre flanc alternativement une surépaisseur centrale 14a, 14b ou une proéminence 13b pour un dispositif anti-lâcher relatif à l'autre denture.

De plus, comme représenté à la figure 3, le manchon 9 est associé à un double synchroniseur comprenant, de façon usuelle, une bague de friction 15, 16 entre le moyeu 6 et chacun des pignons 2, 3 et plusieurs barrettes 17 parallèles à l'arbre 1 et coulissant chacune dans une rainure 18 du manchon 9 et dans une rainure en vis-à-vis du moyeu 6. Cette dernière rainure 19 est suffisamment profonde pour que la barrette 17 puisse s'y enfoncer à l'encontre d'une poussée radiale exercée par deux joncs annulaires 20 en métal élastique.

En général, trois rainures équidistantes 18 sont prévues, au droit de la partie intérieure cannelée du manchon 9. Ces rainures 18, parallèles aux cannelures 8a, 8b, 8c, comportent ici un relief central 21 sur leur fond, coopérant, quand le manchon 9 est en position médiane 9a, avec un évidement 17a de forme complémentaire prévu sur la face en vis-à-vis de la barrette correspondante 17. Le relief 21 présente des bords inclinés 21a tels qu'un déplacement axial du manchon 9 vers l'un ou l'autre des pignons 2, 3 provoque d'abord un léger déplacement axial de la barrette 17, jusqu'à mise en butée de l'une des bagues 15, 16 contre le pignon 2, 3, associé, puis un enfoncement radial de la barrette 17 dans la rainure 19. La forme de la rainure 18 est compatible avec la réalisation susmentionnée par frittage, la jonction des deux parties du noyau s'effectuant au droit du relief 21.

## Revendications

1. Manchon (9) de crabotage en métal fritté pour boîte de vitesses de véhicule automobile, comportant des cannelures intérieures (8a, 8b, 8c) propres à coulisser sur un moyeu (6) cannelé d'un arbre (1) et apte à s'accoupler alternativement par ses extrémités avec deux dentures (10, 11) de crabotage respectivement solidaires de deux pignons (2, 3) montés fous sur l'arbre (1) de part et d'autre du manchon (9), caractérisé en ce que chaque paire ou la plupart des paires de cannelures consécutives (8a, 8b) du manchon (9) comporte respectivement sur les deux flancs se faisant face, alternativement deux surépaisseurs centrales (14a, 14b) propres à enserrer de façon coulissante l'une (7a) des cannelures du moyeu (6), ou deux proéminences extrêmes (13a, 13b) en vis-à-vis pour un dispositif anti-lâcher correspondant à l'une des deux dentures (10, 11).

2. Manchon selon la revendication 1, caractérisé en ce que chaque cannelure (8a, 8b, 8c) du manchon (9) comporte sur l'un de ses flancs et à l'une de ses extrémités une proéminence (13b) pour un dispositif anti-lâcher, et sur son autre flanc alternativement une proéminence (13a) à son autre extrémité ou une surépaisseur centrale (14a, 14b).

3. Manchon selon l'une des revendications 1 et 2, caractérisé en ce que, le manchon (9) comportant dans sa partie intérieure plusieurs rainures (18) parallèles aux cannelures (8a, 8b, 8c) et contenant chacune une barrette (17) coulissante d'un synchroniseur, chaque rainure (18) comporte dans son fond un relief central (21) à bords inclinés (21a), coopérant avec une face de profil complémentaire de la barrette (17) correspondante.

## Claims

1. Sintered metal dog clutch (9) for a car gear box having internal grooves (8a, 8b, 8c) for sliding on a grooved hub (6) of a shaft (1) and which can be alternately coupled by its ends with two tooth systems (10, 11) respectively integral with two pinions (2, 3) mounted loosely on shaft (1) on either side of dog clutch (9), characterized in that each pair or most of the pairs of consecutive grooves (8a, 8b) of clutch (9) respectively has on the two facing sides alternatively two central reinforcements (14a, 14b) able to slidingly surround one (7a) of the grooves of hub (6), or two facing end protuberances (13a, 13b) for an anti-release device corresponding to one of the two tooth systems (10, 11).

2. Dog clutch according to claim 1, characterized in that each groove (8a, 8b, 8c) of dog clutch (9) has on one of its sides and at one of its ends a protuberance (13b) for an anti-release device and on its other side alternatively a protuberance (13a) at its other end or a central reinforcement (14a, 14b).

3. Dog clutch according to one of the claims 1 and 2, characterized in that the dog clutch (9) has in its internal part several slots (18) parallel to the grooves (8a, 8b, 8c) and in each case containing a sliding bar (17) of a synchronizer, each slot (18) having in its bottom a central relief (21) with inclined sides (21a) cooperating with a complimentary profile face of the corresponding bar (17).

**Patentansprüche**

1. Sintermetall-Kupplungsmuffe (9) für Kraftfahrzeuggetriebe, die Innenkeile (8a, 8b, 8c) besitzt, die auf einer mit Keilen bzw. Keilnuten versehenen Nabe (6) einer Welle (1) gleiten können, und abwechselnd mit ihren Enden in zwei Kupplungsverzahnungen (10, 11) einkuppelbar ist, die jeweils mit einem von zwei Zahnrädern (2, 3) fest verbunden sind, die frei drehbar auf der Welle (1) zu beiden Seiten der Muffe (9) montiert sind, dadurch gekennzeichnet, daß jedes Paar oder die Mehrzahl der Paare aufeinanderfolgender Keile (8a, 8b) der Muffe (9) an den beiden einander gegenüberstehenden Flanken abwechselnd zwei zentrale Verdickungen (14a, 14b), zwischen die einer (7a) der Keile der Nabe (6) verschiebbar eingespannt ist, oder zwei an den Enden vorgesehene Vorsprünge (13a, 13b) für eine einer der beiden Verzahnungen entsprechende Lösungsschutzvorrichtung aufweist.

2. Kupplungsmuffe nach Anspruch 1, dadurch gekennzeichnet, daß jeder Keil (8a, 8b, 8c) der Muffe (9) an einer seiner Flanken und an einem seiner Enden einen Vorsprung (13b) für eine Lösungsschutzvorrichtung und an seiner anderen Flanke abwechselnd einen an seinem anderen Ende vorgesehenen Vorsprung (13a) oder eine zentrale Verdickung (14a, 14b) aufweist.

3. Kupplungsmuffe nach Anspruch 1 oder 2, dadurch gekennzeichnet, daß bei einer Muffe (9), die innen mehrere zu den Keilen (8a, 8b, 8c) parallele und jeweils einen verschiebbaren Bolzen (17) einer Gleichlaufeinrichtung enthaltende Nuten (18) aufweist, jede Nut (18) an ihrem Boden eine zentrale Erhöhung (21) mit schrägen Rändern (21a) besitzt, die mit einer ein ergänzendes Profil aufweisenden Fläche des entsprechenden Bolzens (17) zusammenwirkt.

4

**0 195 706**

## FIG.1

## FIG.2

## FIG.3